# EUROPEAN PATENT APPLICATION

(11) **EP 3 916 663 A1**
(43) Date of publication of application: **01.12.2021**
(21) Application number: 20177345.4
(22) Date of filing: 29.05.2020
(51) Int. Cl.: G06Q 30/02

(54) **SECURED AND TRUSTED ADS**

(71) Applicant: INFOnline GmbH, 53119 Bonn (DE)
(72) Inventor: Passmann, Steffen, 53332 Bornheim (DE)
(74) Representative: Cohausz & Florack

(57) **Abstract**

Inter-alia, a method is disclosed, comprising: receiving advertising information; incorporating the signature into the advertising information; and publishing a public key for authentication of the advertising information. Further, another method is disclosed, comprising: requesting advertising information to be displayed; receiving advertising information, and upon displaying of the advertising information: checking a signature comprised by the advertising information; and displaying the advertising information dependent upon the result of the checking. It is further disclosed according apparatuses, computer programs and a system.

## Description

### FIELD

The following disclosure relates to the field of advertising information, or more particularly relates to systems, apparatuses, and methods for enabling displaying of one or more pieces of advertising information in a trusted fashion.

### BACKGROUND

Publishers operate websites (or other digital offers), on which they are advertising media, referred to as advertising market. Such websites contain different placements in which advertising media (e.g. banners) offered by the publishers can be displayed. The placements are offered in the advertising market by the publisher himself or by a marketer with which the publisher has an affiliate relationship. Marketers can also offer bundled placements on different websites affiliated with the marketer.

Advertisers make advertising material (e.g. in the form of advertising information) available. They either do this themselves or through a commissioned agency. The advertiser or the agency can then plan a campaign to reach the target group specified by the market research for the product that is to be advertised with the advertising material.

Security measures existing on the market and in technology have not developed to a corresponding extent; essentially, there are so-called URL whitelists to prevent fraud in direct marketing with dubious effectiveness in some cases.

As a consequence, the rapidly growing field of fraud in the displaying of advertising media is emerging. In particular, advertising media is played out in environments where it should not be played out at all, i.e. the placement does not correspond to the intention of the advertiser/agency paying for the advertisement. Further present is click fraud, i.e. playing out in high traffic environments in order to get as many deliveries and clicks as possible. Further, the advertising medium respectively advertising media, in terms of type and content is played out in placements that the publisher of a website does not want on his website.

### SUMMARY OF SOME EXEMPLARY EMBODIMENTS

It is a drawback to known solutions that enable the provision of advertising information that advertisers and publishers, who, due to the technical conditions in the advertising market often do not have a direct relationship with each other that quality requirements, in particular trust requirements, set by both parties are not met.

It is thus, inter alia, an object of the present invention to provide a solution that enables even without direct contact between advertisers and publishers to ensure that quality requirements, in particular trust requirements set by both parties when advertising, and thus advertising information such as advertising media are combined.

According to a first exemplary aspect of the present invention, a method is disclosed, the method comprising:
- receiving advertising information;
- incorporating a signature into the advertising information; and
- publishing a public key for enabling authentication of the advertising information.

This method may for instance be performed and/or controlled by an apparatus, for instance a server, e.g. an advertising server. Alternatively, this method may be performed and/or controlled by more than one apparatus, for instance a server cloud comprising at least two servers. The server or the server cloud is configured to provide one or more pieces of advertising information issued by one or more creators.

According to a second exemplary aspect of the present invention, a method is disclosed, the method comprising:
- requesting advertising information to be displayed;
- receiving advertising information, and
- upon triggering a displaying of the advertising information:
- checking a signature comprised by the advertising information; and
- displaying the advertising information dependent upon the result of the checking.

This method may for instance be performed and/or controlled by an apparatus, for instance a server, e.g. a webhosting server. Alternatively, this method may be performed and/or controlled by more than one apparatus, for instance a server cloud comprising at least two servers. The server or the server cloud are configured to provide information via the Internet, such as webpages from one or more parties, e.g. companies, persons, social media, blogs, or the like, to name but a few non-limiting examples. This method may for instance be performed and/or controlled by an electronic device, e.g. smartphone, tablet, wearable, laptop, or the like. This method may for instance be performed and/or controlled by such a server and such an electronic device together.

According to a further exemplary aspect of the invention, a computer program is disclosed, the computer program when executed by a processor causing an apparatus, for instance a server, to perform and/or control the actions of the method according to the first and/or second exemplary aspect.

The computer program may be stored on computer-readable storage medium, in particular a tangible and/or non-transitory medium. The computer readable storage medium could for example be a disk or a memory or the like. The computer program could be stored in the computer readable storage medium in the form of instructions encoding the computer-readable storage medium. The computer readable storage medium may be intended for taking part in the operation of a device, like an internal or external memory, for instance a Read-Only Memory (ROM) or hard disk of a computer, or be intended for distribution of the program, like an optical disc. According to a further exemplary aspect of the invention, an apparatus is disclosed, configured to perform and/or control or comprising respective means for performing and/or controlling the method according to the first and/or second exemplary aspect.

The means of the apparatus can be implemented in hardware and/or software. They may comprise for instance at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to a further exemplary aspect of the invention, an apparatus is disclosed, comprising at least one processor and at least one memory including computer program code, the at least one memory and the computer program code configured to, with the at least one processor, cause an apparatus, for instance the apparatus, at least to perform and/or to control the method according to the first and/or second exemplary aspect.

The above-disclosed apparatus according to any aspect of the invention may be a module or a component for a device, for example a chip. Alternatively, the disclosed apparatus according to any aspect of the invention may be a device, for instance a server or server cloud. The disclosed apparatus according to any aspect of the invention may comprise only the disclosed components, for instance means, processor, memory, or may further comprise one or more additional components.

According to a further exemplary aspect of the invention, a system is disclosed, comprising: at least one first apparatus according to the first aspect of the invention as disclosed above, and at least one second apparatus according to the second aspect of the invention as disclosed, wherein the wherein the at least one first apparatus and the at least one second apparatus are configured to provide (e.g. trusted) advertising information together.

In the following, exemplary features and exemplary embodiments of all aspects of the present invention will be described in further detail.

Example embodiments according to all exemplary aspects enable that publishers and advertisers operate on or in the advertising market partly out of anonymity and be no longer in a direct relationship with each other, in particular from a technical perspective.

The advertising information may, for example, comprise or be represented by an audio and/or visual information, such as sound, image and/or video. Such an audio and/or visual information may be a part of the advertising information. The advertising information may thus comprise one or more additional pieces of information, such as an identifier enabling identification of the respective advertisement comprised by the advertising information, a company or person that created the advertisement or the like, to name but a few non-limiting examples. Further, the advertising information may comprise, at least in part, a placement information indicative of one or more parameters defining where and how the respective advertising media comprised or represented by the advertising information is allowed (e.g. by the creator of the advertising information and/or advertising media of the advertising information) to be displayed. For instance, advertising information indicative of advertisements respectively advertising media not suitable for underagers may be marked by such a placement information, to name but one non-limiting example.

The advertising information may, for example, be an advertisement, an advertising (short) film, an advertising audio track, in general also referred to as advertising medium respectively advertising media, to name but a few non-limiting examples. The advertising information may, for example, be a content, such as a news article, blog post, forum post, social media post or the like, wherein the content (the advertising media) comprised or represented by the advertising information may be displayed or made available to a user as information, particularly via the Internet.

Displaying the advertising information within the meaning of the present disclosure refers to a user requesting e.g. a website to be displayed to him. The publisher of the website may display the website to the user in such a way that a respective advertising information is comprised by the website displayed to the user. Thus, the enabling of the provision of the advertising information by the publisher so that a user can view the respective advertising information on his screen respectively display, as used herein, is referred to as displaying (of) the advertising information

The at least one advertising server may be operated by one or more advertisers and/or commissioned agencies. The at least one advertising server may be part of or form a part of the advertising market. The advertising market may be represented by one or more websites on which advertisement information are to be displayed by one or more publishers of websites to be viewed by one or more users (or other digital offers).

To enable provision of advertising information to users, advertising information are received, e.g. by a transmission of the advertising information from a respective advertiser and/or agency to the at least one advertising server. The advertising information is received after a respective advertising information is created. The received advertising information is then signed by incorporating a signature (e.g. associated with the creator of the advertising information, and/or associated with the sender of the advertising information) into the advertising information.

Such a signature may enable prevention of fraud, in particular evidence that a respective advertising information was displayed without it being presented to a user, e.g. to get money associated with a displaying of the advertising information since the signature of the advertising information may be checked prior to the advertising information respective advertising media comprised or represented by, at least a part, of the advertising information to be displayed to a user.

Such signature may be issued to a creator or sender of the advertising information prior to the creator or sender being able to provide the respective advertising information (e.g. to the at least one advertising information). For instance, the respective creator or sender may request a signature (e.g. private key) so that he can participate in the advertising market by signing content created by him. The creator or sender may be audited, so that e.g. fraudulent users can be identified prior to the provision of respective pieces of advertising information since such fraudulent users are not audited. If the audit of a respective creator or sender (e.g. provider) of advertising information as a participant of the advertising information is positive, the at least one advertising server (and/or a trust center) issues a certificate to the respective participant.

To enable such a checking, a public key for checking and/or authentication of the advertising information is published. For instance, based on a request that is received by the at least one advertising server with which provision of the public key is requested, the public key is provided in response. The respective public key may be stored in a memory, e.g. a memory comprised by or connectable to the at least one advertising server.

In this way, it no longer matters whether there is a direct relationship e.g. between advertisers (providing the respective advertising information created to the at least one advertising server) and publishers (getting the respective advertising information to be displayed to a user from the at least one advertising server). Both the advertising information and additionally, the placement of the advertising information on a website published to a user can be "left alone" in the advertising market according to the solution enabled by example embodiments according to all exemplary aspects and can themselves ensure that they only function in the given and desired environment. As disclosed above, the signature may be checked (e.g. opened) via the publicly available public key and the information (e.g. advertising media, placement information) comprised by the respective advertising information can be viewed respective respectively displayed to a user.

The signature cannot be stolen or copied since it comprises or contains a checksum that only matches the advertising media in which the signature is comprised, at least in part. If a non-certified attacker tries to take a signature from a respective or another advertising information, the signature may be checked via a public key, but the check will fail since the checksum e.g. stored in or represented by the signature of the advertising information does not match to the advertising information.

Further, the placement information optionally comprised or represented by at least a part of the advertising information may be signed. This enables a signed placement of the advertising information. Signing the placement information works in the same way as disclosed above. In this case, the advertising information may comprise (e.g. be equipped with) a corresponding script (e.g. JavaScript) enabling to check the signature of a placement information.

For the purpose of example embodiments according to all exemplary aspects, a script may be, for example, a JavaScript or a Java-based script which can be executed on a client system (e.g. by a client browser and/or a webhosting server), e.g. in the context of the displaying of the advertising information. For example, the script records the content (e.g. news articles, advertising information(s), or similar) provided by the content or advertising server. In addition or alternatively, the script can, for example, record the occurrence or number of times the information reproduced to the user is retrieved. One or more of these parameters may be represented by the metric information captured by the script.

The method according to the second exemplary aspect may be performed and/or controlled, for example as a script or library, by an application on the part of the at least one first device. The application is for example a browser application, or a dedicated application (a so-called app), or an operating system of the at least one first device.

According to an exemplary embodiment of the first exemplary aspect, the method further comprises:
- storing the public key associated with the advertising information enabling to check the signature of the advertising information.

The public key may for instance be stored in such a way that it is retrievable, e.g. when an advertising information respectively the signature of the advertising information is checked or requested to be checked. The memory may for instance be a database that is comprised by the at least one advertising server, or that is connectable to the at least one advertising server.

According to an exemplary embodiment of the first exemplary aspect, the public key is provided (e.g. output) upon request to display the advertising information.

The public key may be provided e.g. by sending it to an entity requesting the public key. Prior to providing the public key, it may for instance be checked whether or not the entity requesting the public key is eligible to be provided with the public key. For instance, the entity requesting the public key may for instance be authenticated, e.g. by checking credentials of the entity requesting the public key.

Additionally or alternatively, at least one certificate authority server may become involved in the method. For instance, an advertising market participant (e.g. publisher, agency) requests at the at least one certificate authority server to be certified, e.g. so that participant can be considered to be eligible. Alternatively or additionally, the participant can be certified based, at least in part, on a recommendation model, i.e. already certified participants suggest further participants. The at least one certificate authority server then checks the participant (e.g. company) thoroughly and, if the outcome of the procedure is positive, signs and/or issues a private key of the new participant with a master certificate, e.g. the public (master) key. The public (e.g. master) key may be freely available, i.e. certified participants in the procedure can now sign advertising information that can be verified with the public (e.g. master) key.

The at least one certificate authority server may publish a single key (to decrypt). Each certified participant has or is assigned with such a private key to encrypt (this key must remain secret because it provides the possibility to sign) his advertising information that he may have created. The (one) public key is, because the at least one certificate authority server has signed every private key of the participants after positive verification respectively auditing, able to decrypt all messages signed with the respective private key(s). Other pieces of advertising information cannot be opened with the public key. In reverse: Only participants are able to create an advertising information (e.g. to sign an advertising medium comprised or represented by the advertising information) which can be opened (e.g. decrypted) with the public key so that displaying of the advertising information is enabled. If the public key matches the advertising information, it is clear that the advertising information (e.g. the advertising media) must stem from a certified company/agency. In addition, the advertising information may be used to prove which participant is the originator of the respective advertising information.

The respective advertising information may then be output or the outputting of the respective advertising information is initiated. In particular, the respective advertising information is output by the at least one advertising server to the at least one webhosting server. For example, the at least one webhosting server has requested provision of one or more pieces of advertising information to be displayed to a user from the at least one advertising server so that the respective one or more pieces of advertising information are output to the at least one webhosting server.

According to an exemplary embodiment of the first exemplary aspect, the method further comprises prior to receiving the advertising information:
- authenticating a creator (e.g. participant of the advertising market) of the advertising information; and
- issuing a private key to the creator to be utilized

Despite an open advertising market and/or advertising platform as utilized and/or enabled by example embodiments according to all exemplary aspects, trust is to be created between the main participants (e.g. publishers/marketers and e.g. advertisers/agencies) in the respective advertising market. For this purpose, the publishers/marketers and advertisers/agencies may join a trust service provider (trust center). This service provider may audit the participating publishers/marketers and/or advertisers/agencies so that they can be authenticated. For instance, it may be determined whether the publishers/marketers and/or advertisers/agencies (e.g. a company) really exists and whether the business activity is serious, to name but a few non-limiting examples. In case the result of such an audit is positive, a respective private key is issued to the respective creator - e.g. participating publishers/marketers and/or advertisers/agencies. For instance, the respective private key may be issued by providing (e.g. sending/transmitting) the respective private key to the respective creator.

According to an exemplary embodiment of the first exemplary aspect, the method further comprises:
- signing the advertising information with the private key issued to a creator (e.g. company paying for the advertising information to be displayed) of the advertising information in case the private key is not comprised by the received advertising information.

The signature may be encrypted (using the certified participant's personal private key). The signature may comprise information about the creator of the advertising medium/media and information about the advertising medium/media itself, such as a checksum for the advertising medium. The advertising information may for instance be signed by incorporating a respective signature of the creator (e.g. participant in the advertising market) into the respective advertising information, or by determining (e.g. calculating) a checksum based, at least in part, on the advertising media and the private key. Then, this checksum may be incorporated into the respective advertising information.

According to an exemplary embodiment of the first exemplary aspect, the method further comprises:
- obtaining a request (e.g. from a client such as the at least one webhosting server) indicative of advertising information to be displayed; and
- providing the advertising information.

The request may for instance be obtained, e.g. by receiving the request from an entity that is different from the at least one advertising server. The request may for instance comprise an ID (identification) that is associated with a respective advertising information to be displayed (e.g. by the at least one webhosting server). Thus, the respective advertising information may comprise, at least a part of it, and/or be associated with such an ID. The respective advertising information may be associated with such an ID e.g. via a look-up table (e.g. stored in the memory), to name but one non-limiting example.

For instance, based on an ID (identification) comprised by the advertising information it is enabled to identify a respective advertising information out of a plurality of advertising information hold available by the at least one advertising server, e.g. to be displayed by the at least one webhosting server of the second exemplary aspect, e.g. by providing the ID to a client browser enabling the client browser to request the respective advertising information.

According to an exemplary embodiment of the first exemplary aspect, the advertising information is streamed from the at least one advertising server to an entity displaying (e.g. providing it to a user that displays the advertising information on its screen) the advertising information that is different from the at least one advertising server.

To display the respective advertising information according to example embodiments of the second exemplary aspect, the advertising information may not be stored on part of the at least one webhosting server performing and/or controlling the method according to the second exemplary aspect. Instead, the respective advertising information may be streamed from the at least one advertising server e.g. by a link pointing from the respective at least one webhosting server providing web services (e.g. displaying a website) to a user to the respective advertising information that is stored on part of the at least one advertising server.

According to an exemplary embodiment of the first aspect, the advertising information is encrypted prior to its provision further preventing a likelihood of fraud happening to the advertising information prior to its displaying.

According to an exemplary embodiment of the first exemplary aspect, the method further comprises:
- storing metric information indicative of information associated with the displaying of the advertising information enabling a feedback to the creator of the advertising information.

The metric information may for instance comprise or represent so-called PIs (page impressions: pure number of calls of different sub-pages e.g. of an internet offer); and/or visits (visits of an internet offer, page impressions may be bundled to visits - e.g. after a predefined period of time, about 30 min. of inactivity (no further Page Impression on a specific offer) a new Visit is measured)); and/or AI (Ad impressions: number of when an ad is fetched from its source, so that it is countable as such an ad impression); to name but a few non-limiting examples.

The advertising information to be displayed to a user is requested, e.g. from the at least one advertising server performing and/or controlling the method according to the first exemplary aspect. As disclosed above, a plurality of pieces of advertising information may for instance be stored and e.g. based on an ID, a respective advertising information may be chosen to be displayed.

To prevent fraud, after the respective advertising information to be displayed is received e.g. from the at least one advertising server, prior to the displaying of the respective advertising information to a user, the respective advertising information is checked based, at least in part, on a signature comprised or represented by, at least a part, of the respective advertising information. Since e.g. a creator of the respective advertising information has to pay for the displaying of its advertising information, the creator has an interest that his actual advertising information is displayed, and not some other information, or it is only suggested to him that his respective advertising information was displayed instead of the respective advertising information actually being displayed to a user.

Since the advertising information is signed (e.g. by the agency), for this purpose a key - the public key - is required to open/encrypt the respective advertising information, which only certified agencies possess. The public key enables to display the advertising information. In this way, it is ensured that only trusted parties can display the respective advertising information to a user.

For instance, while a website comprising the respective advertising information to be displayed to a user is still being rendered (e.g. in the browser), it is checked whether the advertising information is one with a valid signature. If it is a valid advertising information, and thus comprises valid advertising media to be displayed, it is displayed to the user, e.g. via a client browser of the user.

Additionally, it can be measured (e.g. by a verification provider, e.g. embodied by the certificate authority, to name but one non-limiting example) whether the advertising information (e.g. media comprised by the advertising information) was actually displayed or when it was not displayed, or whether it was displayed but the signature was missing or invalid, to name but a few non-limiting examples.

Thus, the checking enables that the advertising information to be displayed can be trusted. This applies to the creator of the advertising information, the publisher (e.g. the at least one webhosting server) and the user seeing the advertising information.

According to an exemplary embodiment of all exemplary aspects, the advertising information comprises an image, text, audio and/or video to be displayed to a user. The image, text, audio and/or video may be referred to as advertising media. Such advertising media usually consist of several elements, mainly graphics and scripts. Such advertising media may be comprised by the advertising information. As disclosed above, in particular, the received advertising information, or at least a part of the advertising information comprises or represents the signature.

According to an exemplary embodiment of the second exemplary aspect, the signature is checked based, at least in part, on a script comprised by the advertising information configured to check a public key (e.g. that may be provided by the at least one advertising server of the first exemplary aspect) associated with the advertising information.

Thus, the advertising information is only displayed in case the signature is checked successfully. Otherwise it may be disregarded or rejected.

In the case that the method according to the second exemplary aspect is performed and/or controlled as a script, this can be transmitted, for example, before the provision of the advertising information, or in the course of (e.g. during) the provision of the advertising information, from the at least one advertising server to the at least one webhosting server. The at least one advertising server can perform and/or control the method according to the first exemplary aspect, and the at least of the webhosting server can perform and/or control the method according to the second exemplary aspect. The script may for instance trigger or perform and/or control the checking of the signature of the respective advertising information.

According to an exemplary embodiment of the second exemplary aspect, the checking is performed by a request to at least one a verification server, wherein the at least one verification server checks the authentication of the advertising information and provides the result of the checking performed by the at least one verification server.

The at least one verification server (also referred to as certificate authority server) may be different from the at least one advertising server performing and/or controlling the method according to the first exemplary aspect and the at least of the webhosting server performing and/or controlling the method according to the second exemplary aspect.

The features and example embodiments of the invention described above may equally pertain to the different aspects according to the present invention.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE DRAWINGS

In the figures show:
- Fig. 1: a schematic block diagram of a system according to an exemplary aspect of the present invention;
- Fig. 2: a schematic block diagram of another system according to an exemplary aspect of the present invention;
- Fig. 3a: a flowchart showing an example embodiment of a method according to the first exemplary aspect of the present invention; and
- Fig. 3b: a flowchart showing an example embodiment of a method according to the second exemplary aspect of the present invention;
- Fig. 4: a schematic block diagram of an apparatus configured to perform the method according to the first exemplary aspect of the present invention; and
- Fig. 5: a schematic block diagram of an apparatus configured to perform the method according to the second exemplary aspect of the present invention.

### DETAILED DESCRIPTION OF SOME EXEMPLARY EMBODIMENTS

The following description serves to deepen the understanding of the present invention and shall be understood to complement and be read together with the description as provided in the above summary section of this specification.

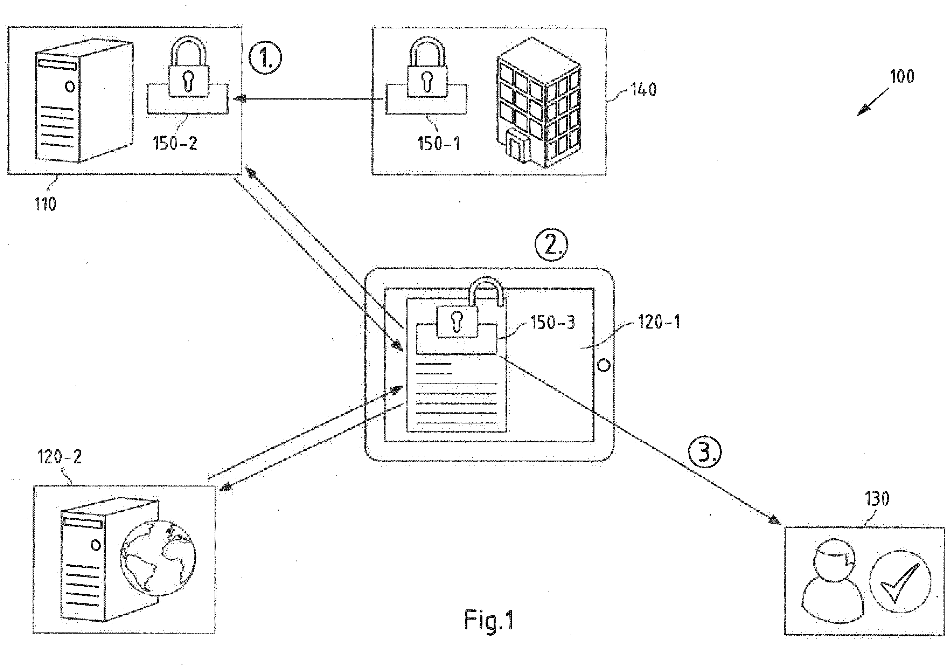

Fig. 1 is a schematic high-level block diagram of a system 100 according to an example embodiment of all exemplary aspects.

System 100 comprises an advertising server 100 (also referred to as "Adserver"), a client browser 120-1, a webhosting server 120-2 (also referred to as "Publisher Webserver"), a certificate authority 130 (also referred to as "Ad Verification Provider"), and an entity 140, also referred to as "Agency" 140.

The features of the webhosting server disclosed above in the summary section of this specification may either be performed by the client browser 120-1, or the webhosting server 120-2, or by both the client browser 120-1 and the webhosting server 120-2 together.

The numbers 1 to 3 in circles illustrate an example sequence of steps that are performed either by the method according to the first exemplary aspect, or by the method according to the second exemplary aspect, or by both the method according to the first exemplary aspect and by the method according to the second exemplary aspect.

The client browser 120-1 is executed e.g. by an electronic device (e.g. smartphone, tablet, wearable, personal computer, notebook, IoT device) of a user which is considered to be a potential customer of a product and/or service that is advertised with a respective advertising information. It is schematically shown that a webpage is displayed by the electronic device, at present a tablet, which is shown by the page with the schematically drawn text as lines. Of course, the webpage can comprise image(s), video(s), etc. to be displayed to a user. The advertising information is displayed on a screen of such an electronic device of the user. The advertising information is displayed by providing one or more pieces of information from the webhosting server 120-2, and optionally from the advertising server 110 (e.g. initiated by the webhosting server 120-2) to the client browser 120-1.

The agency 140 is authenticated to enable provision (e.g. uploading) of the advertising information 150-1 to the advertising server 110. Prior to the agency 140 being able to authenticate itself, it may have been audited (e.g. utilizing the certificate authority server 130).

A respective advertising information 150 is created e.g. by an agency 140 and provided to the advertising server 110 (see step: encircled number 1). Prior to the provision, in the scenario illustrated in Fig. 1, the advertising information is signed (see symbol "lock" illustrated at the advertising information 150-1).

The advertising server 110 receives the respective advertising information and stores it in a memory comprised by or connectable to the advertising server 110.

The client browser requests the provision of a website from the webhosting server 120-2. The publisher of the respective website provides the respective website to the client browser 120-1, and the publisher additionally wishes to incorporate advertising media into the website. The advertising media is comprised or represented by, at least in part, the advertising information 150-2 stored by the advertising server 110. In this example embodiment, the advertising information is not provided by the webhosting server 120-2, but directly by the advertising server 110. The website provided by the webhosting server 120-2 may for instance comprise a respective link to the advertising server 110 so that the respective advertising information 150-2 may be streamed (or uploaded) to the client browser 120-1 (see step: encircled number 2).

The client browser 120-1 performs and/or controls a checking of the received advertising information (from the advertising server 110) by checking a signature of the respective advertising information. The signature is checked e.g. based on a public key stored by the advertising server 110. In this case, the signature is not checked by the client browser 120-1, but by the certificate authority server 130 (see step: encircled number 3). If the signature of the advertising information is checked successfully (see open lock illustrated at advertising information 150-3), the advertising media comprised or represented by at least a part of the advertising information that is received by the client browser 120-1 is displayed to the user. One or more metric information associated with the displaying of the advertising information may for instance be gathered, e.g. to enable feedback to the agency 140 about one or more performance indicators of the advertising information, to name but one non-limiting example.

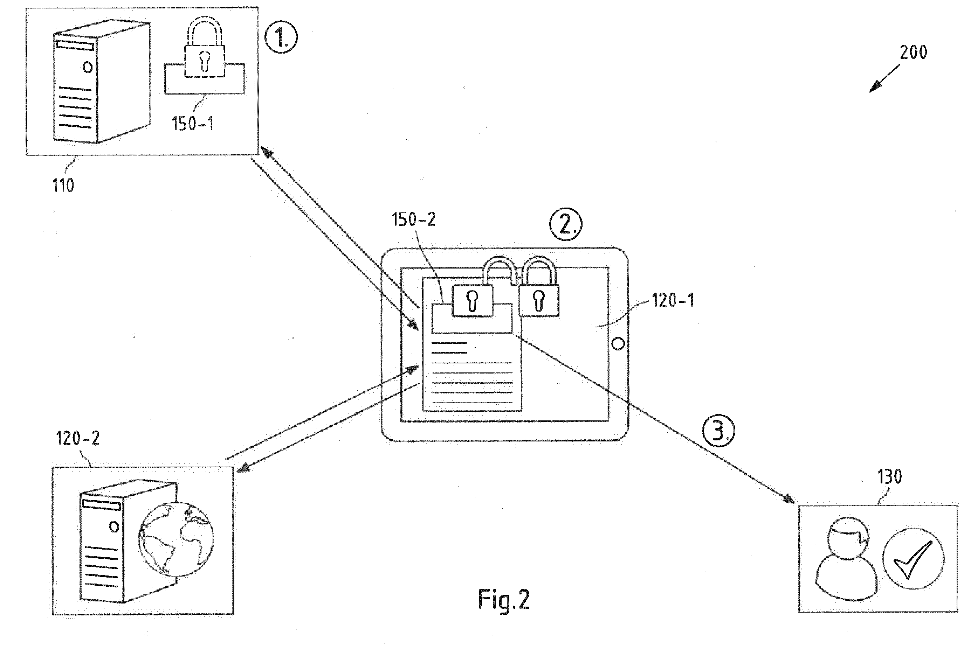

One or more of the following features may be performed in addition or in the alternative to a respective feature of the features disclosed above:
The certificate authority server 130 may represent a trust center. The certificate authority server 140 may for instance sign a private key of each participant, in particular of the agency 140, or creates a signed key for participants requested to take part in the advertising market enabled by the system 100 of Fig. 1 (or system 200 of Fig.2). The respective participant uses his private key to sign a respective advertising information (such as advertising information 150-1) comprising advertising media respective material and/or placement information e.g. representing a requirement where the respective advertising media/material is allowed to be placed.

The certificate authority server 130 (e.g. representing a trusted authority, e.g. trust center) publishes a (public) key for authentication of the signed advertising information 150-2 (e.g. comprising placement information) that is provided from the agency 140 to the advertising server 110. The certificate authority server 130 remains passive in the advertising market, which means that advertisers and/or publishers may act autonomously with the help of the private key(s) and the public key(s). By means of the signature stored in the advertising information 150-2, the advertising information 150-3 (when provided as the advertising information 150-2 to the client browser 120-1) may convince itself that it is to be displayed in a trustworthy environment. Additionally, the placement of the advertising information may also use the signature comprised by the respective advertising information for the advertising medium comprised by the advertising information e.g. to determine whether it is a trusted advertising medium from a trusted source, to name but one non-limiting example.

The arrows illustrated between the entities comprised by system 100 illustrate one or more pieces of information that are transmitable between the entities. In addition to a signature, actual encryption may also be used. Such encryption may also be useful, e.g. such as encryption of the advertising medium/media comprised by the advertising information, and/or of the complete advertising information. Then, as is illustrated by the arrows, e.g. the advertising information 150-1 is provided to the advertising server 110 as an encrypted advertising information. Further, the advertising information 150-2 as stored by the advertising information 110 may be provided as an encrypted advertising information to the client browser 120-1. Of course, additional information e.g. messages required by a used communication protocol may be encrypted as well. An entity receiving such an encrypted message may be enabled to decrypt the message/information accordingly.

Fig. 2 is a schematic high-level block diagram of a system 200 according to an example embodiment of all exemplary aspects.

In contrast to the system 100 shown in Fig. 1, the certificate autorithy server 130 (e.g. the trust center) is actively involved in the advertising market enabled by the system 200. For illustrative purposes, the agency is not shown in Fig. 2. It will be understood that e.g. in the same way as disclosed above in Fig. 1, an agency may create a respective advertising information and provide it to the advertising server 110.

According to example embodiments of all exemplary aspects utilizing the system 200, a respective advertising information 150-1 (e.g. comprising advertising material/media and/or placement information) actively checks the authenticity of the respective deposited signatures comprised by the advertising information 150-1 and the respective contents (checksums) e.g. against a web service provided by the certificate authority server 130. When the respective advertising information is provided from the advertising server 110 to a client browser 120-2 as advertising information 150-2, the advertising information 150 may comprise a script (e.g. based on JavaScript, to name but one non-limiting example) that is executed when the advertising information 150-2 is to be displayed via the client browser 120-1 to a user. The script does or initiates a check of the signature that is incorporated into the advertising information 150 (both advertising information 150-1 and 150-2). The check may for instance be initiated at the certificate authority server 130.

The system 200 may comprise the advantage over system 100 that no special technology may be required in the advertising server 110, but it can be controlled e.g. by a script in the advertising information 150 itself.

Example embodiments according to all exemplary aspect enable in particular perform and/or control the method of the first exemplary aspect and the method of the second exemplary aspect together. For instance, one or more of the following embodiments may also be enabled:

### Embodiment 1:

In the request for the advertising information (e.g. advertising material), a signature for the website or the placement is transmitted to the advertising server. If the signature is correct, the advertising media is delivered or the Ad Verification Provider is informed that it was a verified ad impression.

### Embodiment 2:

The delivered advertising information checks if it is in a trusted environment (correct signature of the website/placement). If the signature is correct, the advertising media displays itself or the Ad Verification Provider is informed that it was a verified ad impression

In the digital advertising market, as enabled e.g. by a system 100 of Fig. 1, and/or the system 200, a distinction may essentially be made between two forms of advertising marketing of an advertising medium and its placements, namely direct marketing and programmatic advertising. In direct marketing, the publisher/marketer may sell a placement directly to an advertiser/agency. Usually, the agency or advertiser can book a placement directly with a publisher or its marketer.

In the most direct descriptive of all business relationships in the advertising market, the advertiser may place (e.g. upload) the advertising material on his or her advertising server(s) (e.g. of the commissioned agency) and the publisher may insert the respective advertising information directly into the desired placement, e.g. on his or her website. Nevertheless, a number of security measures may also be used in this direct business relationship. For example, the advertising server may store the domain of the website from which the corresponding advertising information may be pulled (e.g. downloaded). Often an "Ad Verification Provider" (see certificate authority server 130) may also used. This may measure as an independent third party/instance where, when and/or how often an advertising information was played out, thus displayed to one or more users, e.g. in order to establish trust between the advertiser(s) and the publisher(s). This may depend on circumstances. It may also be possible that e.g. billing is based on the data measured (e.g. represented by one or more pieces of metric information) e.g. by the "Ad Verification Provider".

Further, it is the case that programmatic advertising has overtaken direct marketing in terms of distribution. With programmatic advertising, a publisher/marketer auctions a placement to advertisers while the website is still being rendered on the client system.

This requires a number of entities and platforms to communicate with each other, some of them comprised by system 100 of Fig 1 and/or system 200 of Fig. 2. Essential with regard to the present invention is the finding that there is a large number of participants in the advertising market. This applies on the one hand to the technical background, i.e. providers of the different service platforms required (Supply/Sell Side Platform, Demand Side Platform, Data Management Platform, Ad Exchange), and on the other hand that it is an "auction", for instance different publishers/marketers offer their placements and as many advertisers as possible bid on them to place their respective one or more pieces of advertising information. The advertiser and publisher may not be involved in the actual displaying of the advertising information, i.e. the communication between the advertising server (the servers, as used herein, may not necessarily have to be dedicated (e.g. advertising) server(s), it may be possible that the advertising provision (e.g. delivery) may only be a sub-function of a service platform (e.g. Demand Side Platform)) and the client system. The publisher or marketer may provide a placement of a respective advertising information on the Supply/Sell Side Platform and the advertiser may provide the respective advertising information comprising the advertising media and optionally, the desired placement represented by the placement information comprisable by the respective advertising information. Further, the advertiser (e.g. agency) may provide/specify a desired target group on the Demand Side Platform/Data Management Platform, so that basically everything is set and defined. The displaying may then be done autonomously, at least in part), e.g. via example embodiments according to all exemplary aspects.

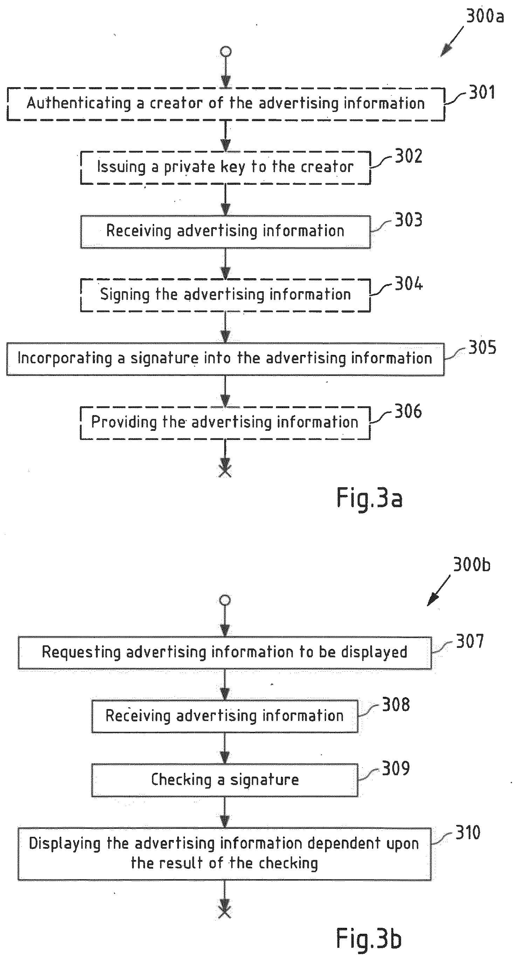

Fig. 3a is a flowchart 300a showing an example embodiment of a method according to the first exemplary aspect of the present invention. This flowchart 300a may for instance be performed by a server, e.g. advertising server 110 of Fig. 1.

In an optional first step 301, a creator of one or more pieces of advertising information to be displayed to a user is authenticated. In particular, the creator may be audited to check whether he is trustworthy, so that the authenticating of the creator can be performed.

In an optional second step 302, in case the creator is successfully authenticated, a private key with which the creator can sign one or more pieces of advertising information created by him can be signed, is issued to the creator. The private key may for instance be issued by providing (e.g. sending) the private key to the creator. The private key can be used to e.g. generate a checksum that can be verified (e.g. checked) when a respective advertising information is to be checked prior to its display (see step 309 of flowchart 300b).

In a third step 303, one or more pieces of advertising information (e.g. created by the creator) are received. The creator may for instance upload the created one or more pieces of advertising information to the advertising server performing and/or controlling the flowchart 300a. The one or more pieces of advertising information may for instance be signed with the signature of the creator (e.g. based, at least in part on the private key issued to the creator) prior to the receiving of the one or more pieces of advertising information.

In case the received one or more pieces of advertising information are not signed, in an optional fourth step 304, the respective one or more pieces of advertising information are signed.

In a fifth step 305, a respective signature is incorporated into the received one or more pieces of advertising information enabling to check whether or not the respective one or more pieces of advertising information were subject to fraud(s) prior to the respective one or more pieces of advertising information being displayed (e.g. in a client browser requesting a website hosted by a webhosting server (e.g. webhosting server 120-2 of Fig. 1 and/or Fig. 2).

Then, in an optional sixth step 306, the respective one or more pieces of advertising information are provided, e.g. by outputting them based on a received request. For instance, a webhosting server may request the provision of one or more pieces of advertising information to be incorporated into a website to be displayed to a user in the respective client browser of the user. Suitable pieces of advertising information are selected and then provided e.g. to the webhosting server, and/or directly to the client browser. Also, the webhosting server may request the provision of one or more pieces of advertising information, and the respective one or more pieces of advertising information are provided (e.g. output/sent) directly to a respective client browser. In this case, the request comprises e.g. an address information of the respective client device.

Fig. 3b is a flowchart 300b showing an example embodiment of a method according to the first exemplary aspect of the present invention. This flowchart 300b may for instance be performed by a server, e.g. webhosting server 120 of Fig. 1.

In a first step 307, one or more pieces advertising information to be displayed are requested. The request may be transmitted from the webhosting server to an advertising sever (e.g. advertising server 110 of Fig. 1 and Fig. 2), or via a client browser to the advertising server.

In a second step 308, the one or more pieces of advertising information that are requested in step 307 are received. In case the respective one or more pieces of advertising information are provided by an advertising server (e.g. advertising server 110 of Fig. 1 and Fig. 2) storing the respective one or more pieces of advertising information to a client browser (e.g. client browser 120-1 of Fig. 1 and Fig. 2), within the meaning of the present disclosure, this is considered as the one or more pieces of advertising information being received by the webhosting server 120 (thus comprising webhosting server 120-2 - the actual server - and the client browser 120-2) since the website to be displayed via the client browser is provided by the webhosting server 120-2 to the client browser 120-1.

In a third step 309, the entity receiving the respective one or more pieces of advertising information performs a checking of a signature comprised by or represented by, at least a part of the respective advertising information. In case the check (e.g. checking of the signature represented by a checksum, based, at least in part, on a public key that is accessible via the advertising server 110, or the ad verification server 130 of Fig. 1 and Fig. 2) is successful, in a forth step 310, the respective one or more pieces of advertising information are displayed to a user via his client browser. In case the check is not successful, the displaying of the respective one or more pieces of advertising information, or a part of it that could not be checked successfully, is canceled so that the respective pieces of advertising information are not displayed to a user. Additionally, the advertising server may get an error message informing the advertising server of one or more potential fraudulent pieces of advertising information so that the advertising server may trigger one or more further actions, like e.g. contacting the respective creator(s) of the respective fraudulent pieces of advertising information, to name but one non-limiting example.

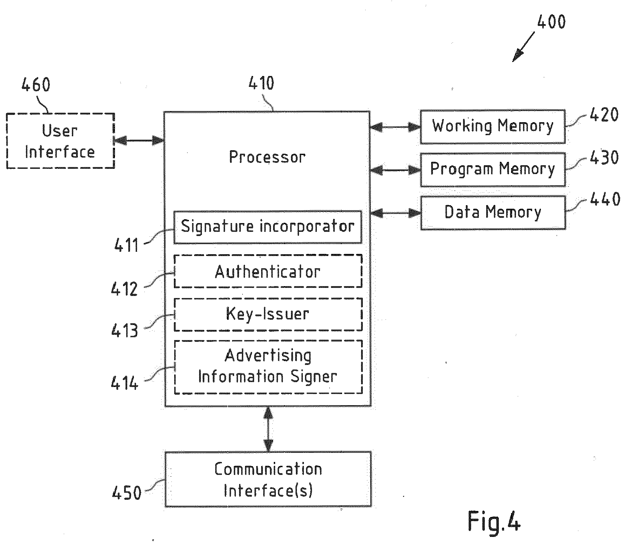

Fig. 4 is a schematic block diagram of an apparatus 400 according to an exemplary aspect of the present invention, which may for instance represent the advertising server 110 of Fig. 1.

Apparatus 400 comprises a processor 410, working memory 420, program memory 430, data memory 440, communication interface(s) 450, and an optional user interface 460.

Apparatus 400 may for instance be configured to perform and/or control or comprise respective means (at least one of 410 to 460) for performing and/or controlling the method according to the first exemplary aspect of the present invention. Apparatus 400 may as well constitute an apparatus comprising at least one processor (410) and at least one memory (420) including computer program code, the at least one memory and the computer program code configured to, with the at least one processor, cause an apparatus, e.g. apparatus 400 at least to perform and/or control the method according to the first exemplary aspect of the present invention.

Processor 410 may for instance comprise a signature incorporator 411 as a functional and/or structural unit. Signature incorporator 411 may for instance be configured to incorporate a signature into an advertising information (see step 305 of Fig. 3a).

Processor 410 may for instance comprise an optional authenticator 412 as a functional and/or structural unit. Optional authenticator 412 may for instance be configured to authenticate a participant (e.g. creator of an advertising information) of an advertising market (e.g. as utilized by the systems 100 and 200 of Fig. 1 and Fig. 2 (see step 301 of Fig. 3a).

Processor 410 may for instance comprise an optional key issuer 413 as a functional and/or structural unit. Optional key issuer 413 may for instance be configured to issue a private key to a participant (e.g. creator of an advertising information) of an advertising market (e.g. as utilized by the systems 100 and 200 of Fig. 1 and Fig. 2 (see step 302 of Fig. 3a).

Processor 410 may for instance comprise an optional advertising information signer 414 as a functional and/or structural unit. Optional advertising information signer 414 may for instance be configured to sign a respective advertising information (see step 304 of Fig. 3a).

Processor 410 may for instance further control the memories 420 to 440, the communication interface(s) 450, and the optional user interface 460.

Processor 410 may for instance execute computer program code stored in program memory 430, which may for instance represent a computer readable storage medium comprising program code that, when executed by processor 410, causes the processor 410 to perform the method according to the first exemplary aspect of the present invention.

Processor 410 (and also any other processor mentioned in this specification) may be a processor of any suitable type. Processor 410 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 410 may for instance be an application processor that runs an operating system.

Program memory 430 may also be included into processor 410. This memory may for instance be fixedly connected to processor 410, or be at least partially removable from processor 410, for instance in the form of a memory card or stick. Program memory 430 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 430 may also comprise an operating system for processor 410. Program memory 430 may also comprise a firmware for apparatus 400.

Apparatus 400 comprises a working memory 420, for instance in the form of a volatile memory. It may for instance be a Random Access Memory (RAM) or Dynamic RAM (DRAM), to give but a few non-limiting examples. It may for instance be used by processor 410 when executing an operating system and/or computer program.

Data memory 440 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 440 may for instance store one or more pieces of advertising information, one or more pieces of signatures, one or more private keys, a public key, or a combination thereof, to name but a few non-limiting examples.

Communication interface(s) 450 enable apparatus 400 to communicate with other entities, e.g. with webhosting server 120 of Fig. 1. The communication interface(s) 450 may for instance comprise a wireless interface, e.g. a cellular radio communication interface and/or a WLAN interface) and/or wire-bound interface, e.g. an IP-based interface, for instance to communicate with entities via the Internet.

User interface 460 is optional and may comprise a display for displaying information to a user and/or an input device (e.g. a keyboard, keypad, touchpad, mouse, etc.) for receiving information from a user.

Some or all of the components of the apparatus 400 may for instance be connected via a bus. Some or all of the components of the apparatus 400 may for instance be combined into one or more modules.

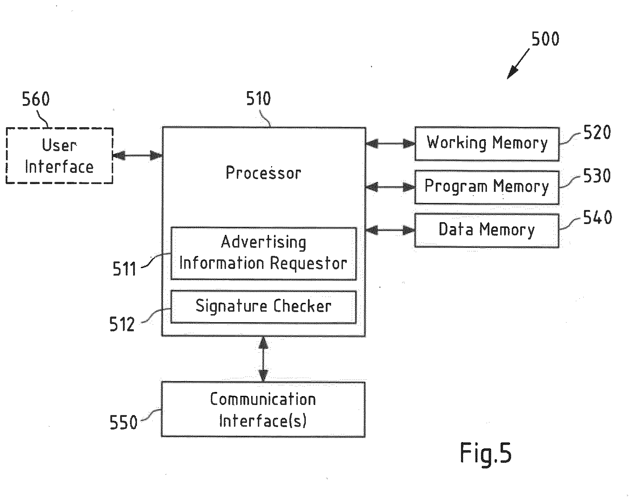

Fig. 5 is a schematic block diagram of an apparatus 500 according to an exemplary aspect of the present invention, which may for instance represent the webhosting server 120-2 of Fig. 1.

Apparatus 500 comprises a processor 510, working memory 520, program memory 530, data memory 540, communication interface(s) 550, and an optional user interface 560.

Apparatus 500 may for instance be configured to perform and/or control or comprise respective means (at least one of 510 to 560) for performing and/or controlling the method according to the second exemplary aspect of the present invention. Apparatus 500 may as well constitute an apparatus comprising at least one processor (510) and at least one memory (520) including computer program code, the at least one memory and the computer program code configured to, with the at least one processor, cause an apparatus, e.g. apparatus 500 at least to perform and/or control the method according to the second exemplary aspect of the present invention.

Processor 510 may for instance comprise an advertising information requestor 511 as a functional and/or structural unit. Advertising information requestor 511 may for instance be configured to request the provision of an advertising information (see step 307 of Fig. 3b).

Processor 510 may for instance comprise a signature checker 512 as a functional and/or structural unit. Signature checker 512 may for instance be configured to check a signature comprised or represented by, at least a part of a received advertising information (see step 309 of Fig. 3b).

Processor 510 may for instance further control the memories 520 to 540, the communication interface(s) 550, and the optional user interface 560.

Processor 510 may for instance execute computer program code stored in program memory 530, which may for instance represent a computer readable storage medium comprising program code that, when executed by processor 510, causes the processor 510 to perform the method according to the second exemplary aspect of the present invention.

Processor 510 (and also any other processor mentioned in this specification) may be a processor of any suitable type. Processor 510 may comprise but is not limited to one or more microprocessor(s), one or more processor(s) with accompanying one or more digital signal processor(s), one or more processor(s) without accompanying digital signal processor(s), one or more special-purpose computer chips, one or more field-programmable gate array(s) (FPGA(s)), one or more controller(s), one or more application-specific integrated circuit(s) (ASIC(s)), or one or more computer(s). The relevant structure/hardware has been programmed in such a way to carry out the described function. Processor 510 may for instance be an application processor that runs an operating system.

Program memory 530 may also be included into processor 510. This memory may for instance be fixedly connected to processor 510, or be at least partially removable from processor 510, for instance in the form of a memory card or stick. Program memory 530 may for instance be non-volatile memory. It may for instance be a FLASH memory (or a part thereof), any of a ROM, PROM, EPROM and EEPROM memory (or a part thereof) or a hard disc (or a part thereof), to name but a few examples. Program memory 530 may also comprise an operating system for processor 510. Program memory 530 may also comprise a firmware for apparatus 500.

Apparatus 500 comprises a working memory 520, for instance in the form of a volatile memory. It may for instance be a Random Access Memory (RAM) or Dynamic RAM (DRAM), to give but a few non-limiting examples. It may for instance be used by processor 510 when executing an operating system and/or computer program.

Data memory 540 may for instance be a non-volatile memory. It may for instance be a FLASH memory (or a part thereof), any of a ROM, PROM, EPROM and EEPROM memory (or a part thereof) or a hard disc (or a part thereof), to name but a few examples. Data memory 440 may for instance store one or more pieces of advertising information, one or more pieces of signatures, one or more private keys, a public key, or a combination thereof, to name but a few non-limiting examples.

Communication interface(s) 550 enable apparatus 500 to communicate with other entities, e.g. with advertising server 110 of Fig. 1. The communication interface(s) 550 may for instance comprise a wireless interface, e.g. a cellular radio communication interface and/or a WLAN interface) and/or wire-bound interface, e.g. an IP-based interface, for instance to communicate with entities via the Internet.
User interface 560 is optional and may comprise a display for displaying information to a user and/or an input device (e.g. a keyboard, keypad, touchpad, mouse, etc.) for receiving information from a user.

Some or all of the components of the apparatus 500 may for instance be connected via a bus. Some or all of the components of the apparatus 500 may for instance be combined into one or more modules.

The following features of example embodiments according to all exemplary aspects shall also be considered to be disclosed:
After an initial assessment, the process could work on existing technologies. This means that no special components are required (no special or adapted ad server, Supply/Sell Side Platform or Demand Side Platform), everything that is necessary can be converted into JavaScript and attached to the advertising material or integrated into the website. This means that in the simplest case only a consensus between publisher/marketer and agency/customer is required. The technology operators (e.g. Google) can probably be left out.

Ad-fraud or playout in undesirable environments is largely excluded or can be proven or even prevented (e.g. because the advertising medium does not work if it is displayed on a non-authenticated website (website of a certified participant).

The ad verification provider can measure without any doubt which advertising medium was played out where.

In the present specification, any presented connection in the described embodiments is to be understood in a way that the involved components are operationally coupled. Thus, the connections can be direct or indirect with any number or combination of intervening elements, and there may be merely a functional relationship between the components.

Moreover, any of the methods, processes and actions described or illustrated herein may be implemented using executable instructions in a general-purpose or special-purpose processor and stored on a computer-readable storage medium (e.g., disk, memory, or the like) to be executed by such a processor. References to a 'computer-readable storage medium' should be understood to encompass specialized circuits such as FPGAs, ASICs, signal processing devices, and other devices.

The expression "A and/or B" is considered to comprise any one of the following three scenarios: (i) A, (ii) B, (iii) A and B. Furthermore, the article "a" is not to be understood as "one", i.e. use of the expression "an element" does not preclude that also further elements are present. The term "comprising" is to be understood in an open sense, i.e. in a way that an object that "comprises an element A" may also comprise further elements in addition to element A.

It will be understood that all presented embodiments are only exemplary, and that any feature presented for a particular example embodiment may be used with any aspect of the invention on its own or in combination with any feature presented for the same or another particular example embodiment and/or in combination with any other feature not mentioned. In particular, the example embodiments presented in this specification shall also be understood to be disclosed in all possible combinations with each other, as far as it is technically reasonable and the example embodiments are not alternatives with respect to each other. It will further be understood that any feature presented for an example embodiment in a particular category (method/apparatus/computer program/system) may also be used in a corresponding manner in an example embodiment of any other category. It should also be understood that presence of a feature in the presented example embodiments shall not necessarily mean that this feature forms an essential feature of the invention and cannot be omitted or substituted.

The statement of a feature comprises at least one of the subsequently enumerated features is not mandatory in the way that the feature comprises all subsequently enumerated features, or at least one feature of the plurality of the subsequently enumerated features. Also, a selection of the enumerated features in any combination or a selection of only one of the enumerated features is possible. The specific combination of all subsequently enumerated features may as well be considered. Also, a plurality of only one of the enumerated features may be possible.

The sequence of all method steps presented above is not mandatory, also alternative sequences may be possible. Nevertheless, the specific sequence of method steps exemplarily shown in the figures shall be considered as one possible sequence of method steps for the respective embodiment described by the respective figure.

The invention has been described above by means of example embodiments. It should be noted that there are alternative ways and variations which are obvious to a skilled person in the art and can be implemented without deviating from the scope of the appended claims.

## Claims

1. A method, performed by at least one advertising server, comprising:
- receiving advertising information;
- incorporating a signature into the advertising information; and
- publishing a public key for enabling authentication of the advertising information.

2. The method according to claim 1, further comprising:
- storing the public key associated with the advertising information enabling to check the signature of the advertising information.

3. The method according to any of the preceding claims, wherein the public key is provided upon request to display the advertising information.

4. The method according to any of the preceding claims, further comprising prior to receiving the advertising information:
- authenticating a creator of the advertising information; and
- issuing a private key to the creator to be utilized

5. The method according to claim 4, further comprising:
- signing the advertising information with the private key issued to a creator of the advertising information in case the private key is not comprised by the received advertising information.

6. The method according to any of the preceding claims, further comprising:
- obtaining a request indicative of advertising information to be displayed; and
- providing the advertising information.

7. The method according to any of the preceding claims, wherein the advertising information is streamed from the at least one advertising server to an entity displaying the advertising information that is different from the at least one advertising server.

8. The method according to any of the preceding claims, further comprising:
- storing metric information indicative of information associated with the displaying of the advertising information enabling a feedback to the creator of the advertising information.

9. A method, performed by at least one client, comprising:
- requesting advertising information to be displayed;
- receiving advertising information, and
- upon triggering a displaying of the advertising information:
- checking a signature comprised by the advertising information; and
- displaying the advertising information dependent upon the result of the checking.

10. The method according to claim 9, wherein the advertising information comprises an image, text, audio and/or video to be displayed to a user.

11. The method according to claim 9 or claim 10, wherein the signature is checked based, at least in part, on a script comprised by the advertising information configured to check a public key associated with the advertising information.

12. The method according to any of the claims 9 to 11, wherein the checking is performed by a request to at least one a verification server, wherein the at least one verification server checks the authentication of the advertising information and provides the result of the checking performed by the at least one verification server.

13. An apparatus configured to perform and/or control or comprising respective means for performing and/or controlling the method of any of the claims 1 to 8.

14. An apparatus configured to perform and/or control or comprising respective means for performing and/or controlling the method of any of the claims 9 to 12.

15. A system, comprising:
- at least one first apparatus according to claim 13; and
- at least one second apparatus according to claim 14,
wherein the at least one first apparatus and the at least one second apparatus are configured to provide advertising information together.
